## Europäisches Patentamt

## European Patent Office

## Office européen des brevets

(11) Publication number: **0 135 945**
**B1**

(12) **EUROPEAN PATENT SPECIFICATION**

(45) Date of publication of patent specification: **08.11.89**

(21) Application number: **84200871.6**

(22) Date of filing: **01.07.81**

(60) Publication number of the earlier application in accordance with Art. 76 EPC: **0 043 694**

(51) Int. Cl.⁴: **B 01 D 46/10,** B 01 D 29/32, B 01 D 53/36, F 01 N 3/02, C 22 B 9/02, F 28 D 19/04, C 04 B 38/00

(54) Apparatus for filtering solid particulates.

(30) Priority: **03.07.80 US 165391**
**03.07.80 US 165611**
**03.07.80 US 165646**
**03.07.80 US 165647**

(43) Date of publication of application:
**03.04.85 Bulletin 85/14**

(45) Publication of the grant of the patent:
**08.11.89 Bulletin 89/45**

(84) Designated Contracting States:
**BE CH DE FR GB IT LI NL SE**

(56) References cited:
**EP-A-0 036 321**
**GB-A-2 064 360**
**GB-A-2 064 361**
**US-A-4 264 346**

(73) Proprietor: **Corning Glass Works**
**Houghton Park**
**Corning New York 14831 (US)**

(72) Inventor: **Lachman, Irwin Morris**
**19 East Fifth Street**
**Corning New York (US)**
Inventor: **Frost, Rodney Irving**
**R.D. 2, Powderhouse Road, Box 537**
**Corning New York 14830 (US)**
Inventor: **Paisley, Robert John**
**17 Orchard Drive**
**Corning New York (US)**
Inventor: **Pitcher, Wayne Harold, Jr.**
**302 Green Valley Drive**
**Big Flats New York (US)**

(74) Representative: **Boon, Graham Anthony et al**
**Elkington and Fife Beacon House 113 Kingsway**
**London, WC2B 6PP (GB)**

Courier Press, Leamington Spa, England.

# EP 0 135 945 B1

## Description

This invention relates to the filtering of solid particulates. Attention is directed to European Patent Application 81 302986.5 (EP—A—0043694) from which the present application is divided.

Removal of solid particulates from fluids — gases and/or liquids — in which the particulates are suspended is commonly done by use of filters. Generally filters are made of porous solid materials in the form of articles or masses with a plurality of pores extending therethrough (which may be interconnected) and having small cross-sectional size or minimum diameter such that the filters are:

(1) permeable to the fluids, which flow through the filters from their inlet surfaces to their outlet surface and (2) capable of restraining most or all of the particulates, as desired, from passing completely through the filters with the fluid. Such pores constitute what is termed "open porosity" or "accessible porosity". The restrained particulates are collected on the inlet surface and/or within the pores of the filter while the fluids continue to pass through those collected particulates and the filter. The minimum cross-sectional size of each of some or all of the pores can be larger than the size of some or all of the particulates, but only to the extent that significant or desired amounts of the particulates become restrained or collected on and/or within the filters during filtration of the fluids flowing through the filters. As the mass of collected particulates increases, the flow rate of the fluid through the filter usually decreases to an undesirable level. At that point, the filter is either discarded as a disposable/replaceable element or regenerated by suitably removing the collected particles off and/or out of the filter so that it can be reused.

Four general main considerations for useful filters are:

(1) filter efficiency: the amount of suspended particles of concern in a given volume of fluid that are removed from that volume of fluid that are removed from that volume of fluid as it passes through the filter (usually expressed as a weight percentage of the total particulates of concern originally in that given volume of fluid prior to passing into the filter);

(2) flow rate: the volume of the fluid per unit of time that passes through the filter and collected particulates or, in a closed continuous feed system, the back pressure or increased pressure created in such system upstream from the filter by the presence of the filter and particulate collected thereon in comparison to what the pressure therein would have been in the absence of the filter;

(3) continuous operating time: the cumulative time of continued service of the filter before filter efficiency and/or flow rate/back pressure become unacceptable so as to necessitate replacement and/or regeneration of the filter and

(4) compact structure: smallest space-saving volume and configuration of the filter for attaining the best combination of filter efficiency, flow rate/back pressure and continuous operating time.

For filtration of fluids at elevated temperatures, consideration must also be given to the filters having adequate mechanical and chemical durability under the prevailing conditions of temperature within the filter and chemical reactivity of the fluids and suspended particulates coming into contact with the filter.

The considerations noted above, especially the four general main ones, appear to be accommodated in varying degrees, but in less than fully satisfactory ways, by the following examples of prior art filters or incomplete filter suggestions:

U.S.A. Patents 2,884,091, 2,952,333 and 3,242,649 illustrate filters of the type made of pleated thin porous sheets of filter material whose layers are interleaved with corrugated or crimped spacers with the parallel corrugations or crimps thereof extending substantially perpendicular to the folds of the plated sheets. In essence, fluid enters a complete layer or column of cells defined by a spacer and then passes through only the filter sheets on each side thereof (but not through corrugation or crimp segments of a spacer separating adjacent cells in that spacer) to effect filtration. Moreover, the corrugations involve cell-like passages whose transverse cross-sections have sinusodial geometric shapes having small interior angle "corners" of substantially less than 30°.

British Patent Specification 848129 shows another form of the pleated-type filters wherein, instead of being interleaved with corrugated spacers, the thin porous sheets of filter material are impressed with spacer dimples to maintain spacing between the pleats.

U.S.A. Patent 3,346,121 discloses thin-porous-walled honeycomb filters of currugated layer structure having crosswise oppositely indented portions that block end portions of the channels or passages in an alternating pattern within each layer (but not necessarily from layer to layer) to cause fluid therein to pass through the porous walls to effect filtration of the fluid. The corrugation pattern is such that the channels or cells have transverse, cross-sectional, geometric shapes with numerous instances of corners formed by small interior angles substantially less than 30°. Moreover, the layered structure involves numerous portions, where the layers adjoin each other, which are of double and sometimes triple layer or wall thickness.

U.S.A. Patent 3,533,753 describes catalyst bodies with layered networks of intersecting "capillary" channels which can function as a filter body for combustion exhaust gas dust or sedimented particles, which can be diesel engine exhaust soot or particulates as noted in U.S.A. Patent 4,054,417.

U.S.A. Patent 3,637,353 discloses a tubular packed bed of granular catalyst with fluid-flow interstices for filtering particulates from exhaust gases generated by diesel engines.

U.S.A. Patent 4,054,417 also suggests making the disclosed diesel exhaust filters of known materials used in heat exchangers for turbine engines or in monolith catalytic converters for automotive vehicles

2

(e.g. as disclosed in U.S.A. Patent 3,112,184 as a corrugated structure and in U.S.A. Patent 3,790,654 as an extruded structure) as alternatives to and in a manner similar to the material in U.S.A. Patent 3,433,753 (i.e. with fluid flow passing into, through and out of every channel).

Research report EPA—600/2—77—056 of the U.S.A. Environmental Protection Agency suggests that several commercially available thin-porous-walled ceramic monoliths of honeycomb appearance, both corrugated and extruded, are potential filters for diesel exhaust particulates. However, the only illustrated arrangement given therefore is the alternate layer cross-flow design of a corrugated monolith, with small interior corner angles less than 30° in transverse cross section, wherein the exhaust gas passes through only those thin walls between layers of cells or passages. This report also suggests the suitability of porous bonded masses of ceramic fibres for filters of diesel exhaust particulates.

British Patent Specification 440,184 discloses that porous bonded sheets of refractory metal oxide fibres can be formed into corrugated or embossed honeycomb structures for use in filtration of hot waste gases containing particulate matter and of molten metal prior prior to casting. As in cases noted above, the transverse cross-section of the corrugated or embossed structures contain numerous small angle corners much less than 30°

U.S.A. Patents 3,893,917 and 3,962,081 describe ceramic foam filters for removing entrained solids or inclusion particulates from molten metals as those metals pass through the foam structure.

U.S.A. Patents Patents 4,041,591 and 4,041,592 disclose thin-walled, honeycombed, multiple-fluid-flow-path bodies with all cells or passages parallel such that fluid entering each of the passages can continue through and pass out of the open exit and thereof without passing through any cell wall. Alternate selected columns or layers of cells have their ends sealed for advantageous separate manifolding to fluid conduits. An optional use indicated for these bodies is in filtration and osmosis when porous materials are used to form the honeycombed body so that some of the fluid flowing in a first set of cells can pass into an adjacent alternate set of cells through the thin porous walls between them while a remaining portion of the fluid with a higher concentration of an undesirable or separable constituent can continue through and pass out of the open exit end of the first set of cells. Examples of the latter use are reverse osmosis filtration and ultrafiltration of saline or impure water to produce potable or purified water, in which cases the surfaces of the porous walls defining the first set of cells are lined with suitable selectively permeable membranes.

Attention is also drawn to EP—A—0036321, EP—A—0042300 and EP—A—0042302, being specifications of European applications filed, but not published, before the present application. These specifications disclose ceramic honeycomb filters. It is noted, however, that none of these documents discloses the use of the foamable cement defined below.

According to the present invention there is provided apparatus for filtering solid particulates from suspension in fluid streams, which comprises a filter of honeycomb structure having a matrix of thin porous walls defining a plurality of cells extending longitudinally and mutually parallel therethrough between inlet and outlet end faces of the structure, the walls containing substantially uniform interconnected open porosity of a volume and size sufficient to enable the fluid to flow completely through the walls and to restrain most or all of the particulates from passing completely through the walls, the transverse cross-sectional shapes of the cells forming a substantially uniformly repeating pattern of geometric shapes without interior corner angles of less than 30°, an inlet group of cells open at the inlet end face and closed adjacent to the outlet end face, an outlet group of the cells closed adjacent to the inlet end face, and open at the outlet end face, each cell of the inlet group sharing cell walls only with cells of the outlet group, and each cell of the outlet group sharing cell walls only with cells of the inlet group, the apparatus being as part of a diesel engine exhaust gas system, interposed across the exhaust gas path, with the inlet face of the filter facing upstream of the gas path, the closing of the groups of cells being achieved by use of a foamable particulate ceramic cement capable of forming a sintered cordierite foamed ceramic mass, the cement consisting essentially, by weight, of:

1—40 cordierite grog,

99—60% ceramic base material and an effective amount of a foaming agent to effect foaming of the cement upon firing to produce the foamed ceramic mass, the base material being raw ceramic material that has an analytical molar composition consisting essentially of: $1.7—2.4 \, MO . 1.2—2.4 \, Al_2O_3 . 4.5—5.4 \, SiO_2$ wherein MO comprises, as mole % of MO, 0—55% MgO and at least 45% MnO, and the grog being ceramic material that has been previously fired and comminuted, and that has an analytical molar composition consisting essentially of: $1.7—2.4 \, RO . 1.9—2.4 \, Al_2O_3 . 4.5—5.2 \, SiO_2$ wherein RO comprises, as mole % of RO, MnO in amount of % up to a mole % that is 20 mole % lower than the mole % of MO that MnO and the balance is substantially MgO.

There are no small interior angle (<30°) corners in the transverse cross-sectional geometric shapes of the cells that inhibit full effective access to such filters by the fluid due to fluid flow patterns and particulate accumulation patterns effected by such shapes with small angle corners. When viewed from each of the inlet and outlet end faces of the filter, alternate groups of cell ends are open and closed in a chequered or chequerboard pattern, with the outlet end face pattern being the opposite of the inlet end face pattern. Generally, the walls are not greater than 1.5 mm (preferably maximum of 0.635 mm) thick. The walls contain substantially uniform randomly interconnected open porosity of a volume and size sufficient to enable the fluid to flow completely through the walls and to restain most or all of the particulates from passing completely through the walls. Generally the open porosity is at least 25% (preferably at least 35%)

3

by volume formed by pores with a mean pore diameter (determined by conventional mercury-intrusion porosimetry) of at least about 1 µm (preferably at least 3.5 µm). The transverse cross-sectional shapes of the cells form a substantially uniformly repeating pattern of geometric shapes without interior angles of less than 30° (preferably less than 45°). The inlet group of the cells is open at the inlet end face and closed adjacent to the outlet end face. The outlet group of the cells is closed to adjacent the inlet end face and open at the outlet end face. Each cell of the inlet group shares cell walls only with cells of the outlet group. Each cell of the outlet group shares cell walls only with cells of the inlet group.

The walls within each of a plurality of transverse sectors (e.g. annular or pie/wedge shaped) of the structure or throughout the structure should beneficially have substantially uniform thickness for substantially uniform filtration within the entirety respectively of such sectors or whole structure to maximize continuous operating time.

Transverse cross-sectional cell density within the structure should be generally at least 1.5 cells/cm² (preferably at least 7.75 cells/cm²) for maximizing filter surface area within a compact structure.

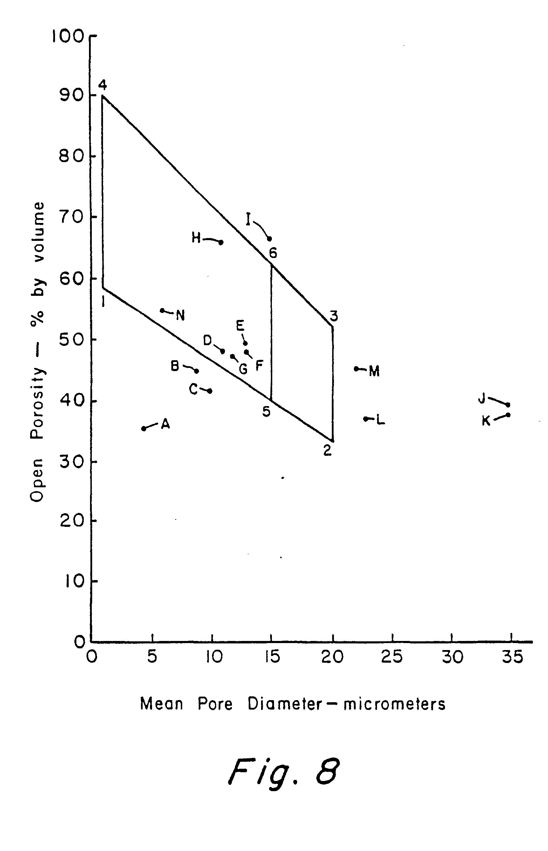

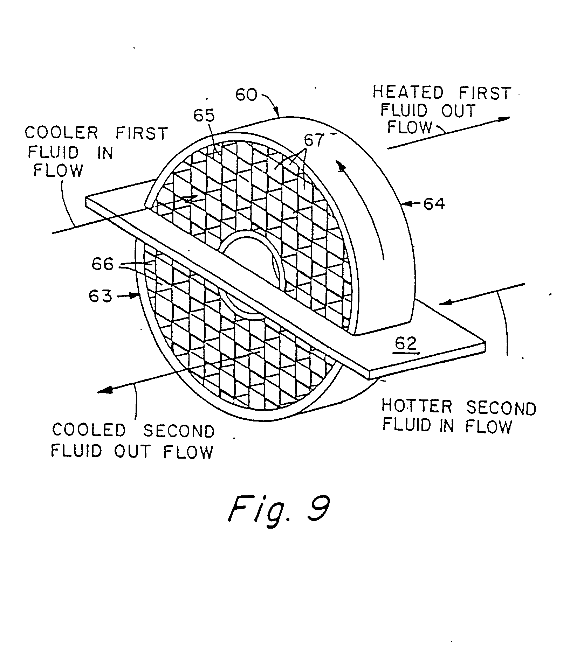

Preferably the volume of interconnected open porosity in the walls and the mean pores diameter forming the open porosity lie uniquely within the area defined by the boundary line connecting points 1—2—3—4 in Fig. 8 and 9 (and more preferably connecting points 1—5—6—4 in the same figure). Such porosity and pore diameters are determined by conventional mercury-intrusion porosimetry.

As a material for making these products, it has been found that sintered products characterised by full density, having a cordierite crystal structure and low thermal expansion coefficient, can be formed of manganese-containing mineral batch compositions which comprise narrower compositional ranges than that disclosed in U.S.A. Patent 3,885,977.

It has further been discovered that the impervious manganese-containing cordierite sintered product can be more economically and more desirably manufactured where pre-reacted cordierite material comprises at least 50 wt% especially 50—95 wt%) of the ceramic batch materials.

This material provides an impervious, unglazed, sintered manganese-containing ceramic product having its major and primary crysal phase being cordierite crystal structure, having an an analytical molar composition of $1.7—2.4\ RO\cdot 1.9—2.4\ Al_2O_3\cdot 4.5—5.2\ SiO_2$ and made of mineral batch composition selected from:

(a) wholly raw ceramic material wherein RO comprises, as mole % of RO, 55—95% MnO and 5.45% MgO, and

(b) at least 50 wt% pre-reacted cordierite material and the balance thereof being raw ceramic material, and wherein RO comprises, as mole % of RO, 5—40% MnO and 60—95% MgO.

In the case of invention products made of wholly raw ceramic material, the more desirable products have RO proportioned as 74—90 mole % MnO and 10—26 mole % MgO.

In the case of invention products made of mixtures of raw ceramic material and pre-reacted cordierite material, the more desirable products have RO proportioned as 5—15 mole% MnO and 85—94 mole % MgO. Moreover, it is preferable to have the pre-reacted cordierite material be 80—90 wt% of the mineral batch composition.

For the most preferred form of the invention, its molar composition is $1.9—2.1\ RO\cdot 1.9—2.1\ Al_2O_3\cdot 4.9—5.1\ SiO_2$.

When desired, MgO in the above formulations can be partially replaced by other oxide such as NiO, CoO, FeO and/or $TiO_2$ in the manner described in U.S.A. Patent 3,885,977 (column 2, lines 55—64). Accordingly, recital herein of MgO is intended to include such optional partial substitutions in the present invention.

The products of this invention not only sinter to impervious condition, but exhibit typical low coefficients of thermal expansion (CTE) on the order of about $15—20 \times 10^{-7}/°C$ (25—1000°C). They are particularly applicable to the production of honeycomb structures by the methods of U.S.A. Patents 3,790,654, 3,899,326, 3,900,546 and 3,919,384, and to the manufacture of ceramic cements for bonding or plugging of cordierite honeycomb structures with similar low CTEs. In particular, the products of this invention in the form of honeycomb structurs are useful in constructing industrial heat recovery wheels.

As regards the cement used to close the groups of cells, it will be seen that the invention employs a foamable particulate ceramic cement capable of forming a sintered cordierite foamed ceramic mass and made by seeding ceramic base material of controlled composition with cordierite grog of another controlled composition and adding thereto a foaming agent in an effective amount to effect foaming of the cement upon firing to produce the foamed ceramic mass.

Minor portions of MgO in either or both of MO and RO can be replaced by equal molar amounts of other oxides such as NiO, CoO, FeO and $TiO_2$ as noted in U.S.A. Patent 3,885,977. Foaming agent can be selected from a variety of substances that decompose to give off gas at about the foaming temperature of the cement, i.e. the temperature at which the grog and base material are in a softened condition adequate to be foamed by the gas. Among such substances are compounds such as carbides, carbonates, or sulphates, preferably of cations that are in the grog and/or base material. Silicon carbide is the preferred foaming agent and can be employed in any effective amount (usually at least 0.25 wt%) up to a practical amount of about 5% by weight of grog plus base material. Larger amounts can be employed without additional benefit, but they dilute the amount of ceramic in the foamed mass. Generally 1—2 wt% SiC (by weight of grog plus base material) is preferred.

To ensure thorough cordierite crystallisation in the foamed ceramic masses, it is advantageous for the grog in the cement to be at least 5 wt% and correspondingly for the base material to not exceed 95 wt%. Preferred proportions are 5—20 wt% grog and 95—80 wt% base material.

While the invention can broadly utilize base compositions within the aforesaid molar composition range embracing both the stoichiometric cordierite area and the nonstoichiometric eutectic cordierite area, it is preferred to use base compositions of the generally stoichiometric type having an analytical molar composition consisting essentially of $1.7—2.4$ $MO \cdot 1.9—2.4$ $Al_2O_3 \cdot 4.5—5.2$ $SiO_2$ wherein MO is as previously stated. Most preferably, such molar composition is $1.8—2.1$ $MO \cdot 1.9—2.1$ $Al_2O_3 \cdot 4.9—5.0$ $SiO_2$ and MO is wholly MnO.

The requisite minimum difference of 20 mole % for MnO in O and RO provides the grog with adequately higher melting point vis a vis melting point of the base material so as to insure proper cordierite crystallisation seeding effect by the grog at foaming temperature. To enhance such effect, it is preferred to have MO of the base composition comprise not more than 15 mole % MgO.

The most preferable grog has an analytical composition of $1.8—2.1$ $RO \cdot 1.9—2.1$ $Al_2O_3 \cdot 4.9—5.2$ $SiO_2$, and RO comprises 8—12mole % MnO and the balance MgO.

If desired, optional customary fluxes may be included in the cement in minor amounts up to 5 wt% of the grog plus base material. Such fluxes are illustratively disclosed in U.S.A. Patents 3,189,512 and 3;634,111, which are incorporated herein by reference.

In a method of manufacturing a filtering apparatus according to the present invention the cement is disposed between two closely spaced cordierite ceramic surfaces, and then the structure with the cement so disposed is fired to foaming temperature in the range of 1160—1325°C and thereafter cooled with the cement converted to the foamed ceramic mass. Preferably the foaming temperature is in the range of 1170—1250°C, especially for attaining foamed ceramic mass that is substantially impervious to fluids. Lower temperatures fail to develop an adequate foaming of the cement. Also, it is desirable to fire to the foaming temperature at an average rate of at least 100°C per hour (preferably at least 200°C per hour) to avoid the possible adverse effect of much slower (e.g. 50°C/hr) heating rates that may cause loss of foaming agent gas before the ceramic constituents of the cement are soft enough to be foamed.

In the accompanying drawings:

Figure 1 is a partially broken away, oblique view of a preferred embodiment of a filter body for use in the present invention.

Figure 2 is a sectional view taken in each plane indicated by each of the line and arrows A—A and the line and arrows B—B of Figure 1.

Figures 3—6 inclusive are views of the end faces of four alternative embodiments of filter bodies for use in the present invention, which bodies have different transverse cross-sectional cell geometries or shapes.

Figure 7 is a longitudinal sectional view through a filter apparatus for filtration of particulates from diesel engine exhaust gas, according to the present invention.

Figure 8 is a graphical representation of the combined open porosity and mean pore size of filters preferably used in the present invention. It includes, as the best mode of carrying out the present invention with respect of filters in diesel engine exhaust conduits or systems, an indication of unique combinations of open porosity and means pore size, within area 1234 of such filters.

Figure 9 is a schematic illustration of a rotatable heat exchanger or heat recovery wheel assembly with filter structure according to the present invention.

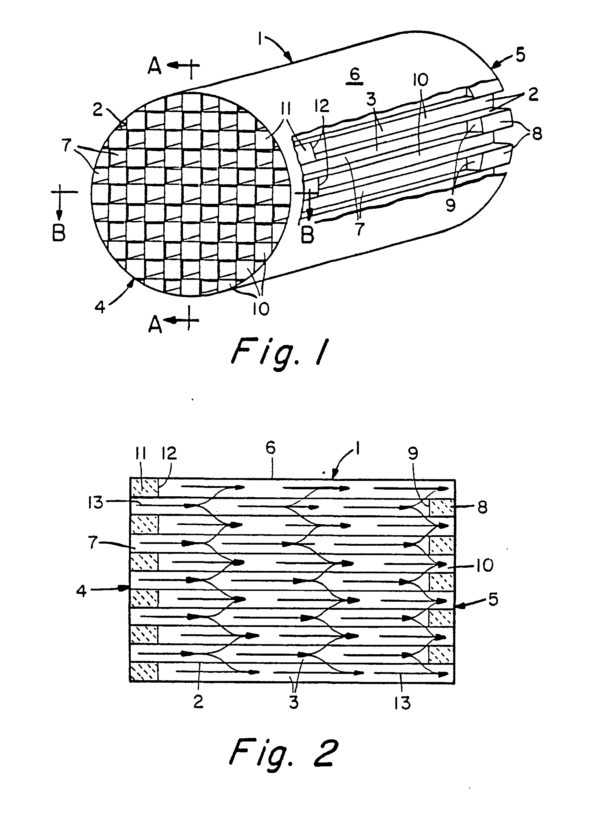

The filter body 1 shown in Figure 1 comprises a cellular or honeycomb structure (monolith) which has a matrix of intersecting, uniformly thin walls 2 defining a plurality of cells 3. The cells 3 extend longitudinally and mutually parallel through the body 1 between the inlet end face 4 and the outlet end face 5. Ordinarily the body 1 also has a peripheral wall or skin 6. An inlet group of alternate cells 7 are open at the inlet end face 4 and are closed, sealed or plugged with closure means 8 adjacent outlet end face 5. Means 8 can be a sealant or cement mass adhering to walls 2 and extending from face 5 a short distance inwardly to end face 9 of means 8. The other alternate cells 10 form an outlet group and are open at outlet end face 5, but they are similarly closed adjacent inlet end face 4 by closure means 11, which likewise extend inwardly a short distance from face 4 to end face 12 of means 11. Thus, as viewed at end faces 4 and 5, the alternating open and closed cells are in a chequered or chequerboard pattern.

Body 1, including means 8 and 11, can be made of any suitable materials such that walls 2 have the requisite interconnected open porosity therein and means 8, 11 are generally impermeable to fluids. Such materials may include ceramics (generally crystalline), glass-ceramics, glasses, metals, cermets, résins or organic polymers, papers or textile fabrics (with or without fillers), and combinations thereof. For walls 2 and skin 6, it is preferred to fabricate them from plastically formable and sinterable finely divided particles and/or short length fibres of substances that yield a porous sintered material after being fired to effect sintering thereof, especially ceramics, glass-ceramics, glasses, metals and/or cermets. As desired (besides volatizable plasticizers/binders for the formable particle batch or mixture), any suitable or conventional fugitive or combustible (burn-out) additive can be dispersed within the formable and sinterable mixture so as to provide appropriate and adequate open porosity in the sintered material of walls 2. Moreover, the requisite open porosity can also be designed into walls 2 by raw material selection as described in U.S.A. Patent 3,950,175.

EP 0 135 945 B1

The body 1 can be fabricated by any suitable technique. It (without plugs 8 and 11) is made preferably by extrusion of a sinterable mixture in the manner as disclosed in U.S.A. Patents 3,790,654, 3,919,384 and 4,008,033. Such extruded green honeycomb body is then fired for effecting the sintered condition thereof in the manner as disclosed in U.S.A. Patent 3,899,326.

Plug means 8, 11 can then be formed in the sintered monolith 1 by injecting a sinterable or other suitable sealant mixture into the appropriate ends of the cells 3. For example such mixture can be injected by means of a pressurized air actuated sealant gun whose nozzle can be positioned at the proper cell openings on the end faces 4, 5 so as to extrude the mixture into and to plug the end portions of the cells. An appropriate assembly and positioning of an array of sealant nozzles of such gun(s) can be used to inject the plug mixture simultaneously in a plurality of all of the alternate cells at each face 4, 5 for efficient production. Upon subsequent firing of the body 1 after having been plugged with a sinterable or other heat-setting mixture, there results rigidified closure masses 8, 11 which are adherently bonded to adjacent portions of walls 2. These plugs 8, 11 are substantially nonpermeable to the fluid to be passed through filter 1.

If so desired, the monolith 1 need not necessarily be fired or sintered before injecting sealant mixture, especially ceramic cement, into the ends of the cells 3. For example, monolith 1 can be made of ceramic material having a firing temperature that is substantially the same as or closely similar to the firing or foaming temperature of an appropriately selected ceramic cement. In that case, the cement can be injected into the cell ends while the monolith is in the unfired or greenware state. Thereafter the green monolith with green cement plugs is fired to suitable temperature or temperatures within the appropriate range to effect sintering of the monolith and of the cement (including foaming thereof if that is a characteristic of it).

Figure 2 shows the pattern of fluid flow through filter 1 in both a vertical column of cells 3 (in plane A—A of Figure 1) and a horizontal column of cells 3 (in plane B—B of Figure 1). Fluid flow is indicated by the lines 13 with arrows. Thus, fluid 13 passes into inlet cells 7 from inlet end face 4, but because of the blocking effect of end faces 9 of plugs 8, the fluid under some pressure then passes through the pores or open porosity in cell walls 2 at top, bottom and both sides of the cells 7 so as to respectively enter outlet cells 10 above, below and on both sides of each cell 7. While fluid 13 passes through the entirety of all cell walls 2, their porosity is such as to restrain particulates therein and thereon as a porous accumulation (which may even fill up all of cells 7 before replacement of the filter 1). It can be seen that the entirety of all cell walls 2 act as filters for unique superior filter capability. The fluid 13 passing into cells 10 then flows out of these cells at the outlet end face 5, since the end faces 12 of plugs 11 adjacent the inlet end face 4 prevents the fluid from reversing direction. Also, plugs 11 prevent fluid 13 from directly entering cells 10 without first going into cells 7 and through walls 2.

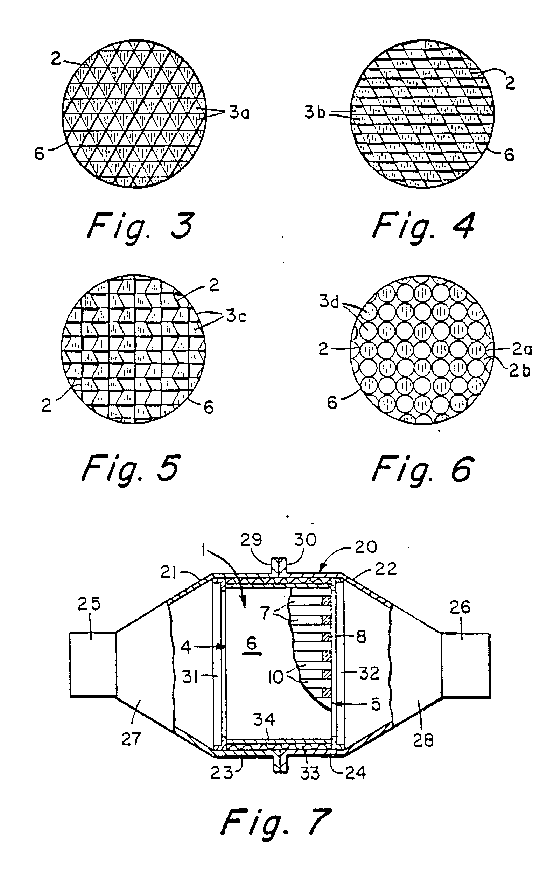

While it is preferred to make the transverse cross-sectional geometry of the cells 3 to be squares are shown in Figure 1, any other suitable geometries may be employed. Examples of such other geometries are shown in Figures 3—6. In Figure 3, cells 3a are in the transverse geometrical form of equilateral triangles, but they could also have the form of right triangles. Figure 4 shows cells 3b with transverse cross-sectional geometry of rhomboids, which could optionally be made as rhombuses. Similarly, rectangles can form the transverse cell geometry instead of squares. A less easily manufactured transverse cell geometry is shown in Figure 5, which constitutes a repeating pattern of quadrilaterals of cells 3c. In each of these polygonal shapes, intersecting walls 2 preferably form included angles that are not less than 60° to avoid the non-uniform accumulation of particulates in smaller angle corners and to enable proper complete plugging of the alternate cells adjacent end faces 4, 5. Also, it may be desirable for enhanced mechanical strength of the honeycomb filter bodies that the cell corners be filleted or slightly filled in with the same or similar material as forms cell walls 2. That latter concept can be extended to a presently lesser desirable form as shown in Figure 6, wherein cell 3d have a circular transverse geometry. The walls 2 have a substantially uniform thickness throughout in that they substantially uniformly vary from their thinnest portions 2a to their thicker (or maximum filleted) portions 2b. Another alternative to the latter one would be eliptical transverse cell geometry. If it is desired for certain purposes, the filter body can be made with a plurality of transverse sectors (e.g. annular or pie/wedge shaped) whereby the transverse cell cross-sectional areas are larger in a sector or sectors than such areas are in another sector or sectors. It is even conceivable that repeating patterns of different transverse geometric cell shapes can be employed in different transverse sectors.

In all variations of the filter body with respect of transverse cell geometry, alternate cells are plugged adjacent each end face in a chequered style pattern such that those cells plugged at the inlet end face are open at the outlet end face and vice versa. Also, the transverse cross-sectional areas of such cells are desirably sized to provide transverse cell densites in the range of 2—93 cells/cm². Correspondingly, it is desirable to make the thin walls with thickness in the range of 0.05—1.27 mm.

The apparatus of the present invention acts as a filter apparatus for removing carbonaceous particulates from diesel engine exhaust gas so as to avoid air pollution by such particulates, which individually can range in size from about 5 micrometers down to and below 0.05 micrometer. Figure 7 shows an exemplary form of such apparatus, which comprises the filter body 1 held within a container or can 20. Body 1 is the same as that shown in Figure 1, with skin 6, inlet cells 7 extending from inlet end face 4 and blocked by plugs 8, and outlet cells 10 open at outlet end face 5. Can 20 is similar to a conventional type of can (see U.S.A. Patent 3,441,381) employed for mounting catalytic converter honeycomb substrates in exhaust systems of internal combustion engines. The can 20 comprises two parts 21, 22 respectively formed of filter-holding portions 23, 24, conduit-connectors 25, 26, conical portions 27, 28, respectively joining connectors 25, 26 to portions 23, 24 and mating flanges 29, 30 which are mechanically fastened together (e.g. by bolts and nuts not shown) to keep the can properly assembled for use and so as to be capable of being unfastened in order to open the can 20 for replacement of filter body 1. Internal annular mounting members 31, 32 of L shaped cross-section are respectively fastened to portions 23, 24 so as to respectively abut against faces 4, 5 and hold body 1 in its proper fixed axial position within can 20. To cushion body 1 against mechanical shock and vibration, it is ordinarily desirable to surround body 1 with a wrapping or mat 33 of metal mesh, refractory fibre and the like, which may fill the annular space between body 1 and portions 23, 24. To minimize heat loss from body 1 and excessive heating of portions 23, 24, a layer of insulating material 34, such as glass or mineral wool mat, may also be wrapped around body 1.

Connectors 25, 26 are suitably fastened (e.g. by welding or gasketed mechanical coupling) to exhaust gas conduits of a diesel engine. While can 20 can be located in and form part of the exhaust gas conduit some distance downstream for the engine exhaust manifold, it can desirably be located near or at the exit from the exhaust manifold. The latter arrangement facilitates regeneration of filter body 1 by utilizing the higher temperature of the exhaust gas upon exiting the exhaust manifold to cause, with excess air in the gas, the combustion of carbonaceous particulates restrained in body 1 to form further gaseous combustion products that can then pass on through and out of body 1 for emission through connector 26 to the tailpipe (not shown) fastened to connector 26. If desirable (especially when can 20 is located downstream along the exhaust conduit some distance from the exhaust manifold), a combustion ignition device may be positioned in can 20, such as a glow plug in conical portion 27 or an electric heater within the central axis of body 1 (similar to the device of U.S.A. Patent 3,768,982), and secondary air may be injected into can 20 upstream from body 1 to assist in regeneration of body 1 without removing it from can 20. Additionally, catalyst substance can be placed on and in walls 2 of body 1 (similar to catalytic converter honeycomb substrates) to facilitate regeneration of combustion in body 1. In ordinary usage, frequent higher speed or rpm of the diesel engine can contribute sufficient heat (e.g. 400—500°C or higher) to cause repetitive regeneration combustion of body 1 without requiring the can 20 to be opened often for replacement of body 1. Nevertheless, removed bodies 1 can be reverse flushed with air to blow much of the particulates out of it into a collector bag and then fully regenerated by high temperature air passed through it before reinstalling in can 20.

In a further embodiment of the invention, the volume of interconnected open porosity and the mean diameter of the pores forming the open porosity lie within the area defined by the boundary lines connecting points 1—2—3—4 in Figure 8 of the drawings.

In a preferred embodiment, the walls are not more than 1.5 mm thick, the volume of interconnected open porosity and the mean diameter of the pores forming the open porosity lie within the area defined by the boundary lines connecting point 1—5—6—4 in Figure 8 of the drawings, and the structure for a transverse cross-sectional cell density of at least 1.5 cells/cm$^2$.

In further advantageous embodiments, the walls are not less than 0.3 mm thick, even more preferably not more than 0.635 mm thick, and the cell density is at least 7.75 cells/cm$^2$.

Dense cordierite sintered structures for these and other products are achieved by the partial substitution of MnO for MgO in the cordierite crystal structure within controlled amounts. That substitution greatly increases the sinterability of the cordierite batch materials by lowering and widening the sintering temperature range at which full density can be achieved. In general, the sintering of mineral batch compositions comprised of wholly raw ceramic materials, to full density occurred at 1200—1300°C, whereas mineral batch compositions containing prereacted cordierite material sintered to impervious conditions at 1250—1410°C. Also, when pre-reacted cordierte material is included in the mineral batch composition, the minimum weight percent manganese oxide necessary to form the impervious product is about 0.6 wt% as compared to a minimum of 12.6 wt% for the mineral batch composition with wholly raw ceramic materials. Therefore, the benefits of utilizing the mineral batch compositions containing prereacted cordierite material are that a more refractory product is produced (similar to regular cordierite without manganese oxide) and at lesser amounts of manganese oxide are required to effect full density. Furthermore, less firing shrinkage is generally experienced with the mineral batch compositions containing prereacted cordierite material.

Full density either is unattainable or cannot be reliably attained with mineral batch compositions which either have wholly raw batch material and too little molar proportion of MnO (i.e. less than 55 mole% of RO), or which contain prereacted cordierite material in amounts which are too small (i.e. less than 50 wt% of the mineral batch composition), or which contain at least about 50 wt% prereacted cordierite material while having a mole proportion of MnO outside the range of 5—40% of RO. The mineral batch composition of wholly prereacted cordierite material can be fired to full density at about 1410°C, but it requires extra expense of thoroughly fine grinding of such batch material prior to shaping and firing it into impervious product.

Impervious sintered products of the invention may contain minor amounts of phases other than the primary cordierite phase as may occur within the molar compositional limits defined above.

As used in the foregoing description of the dense cordierite ceramic of the present invention:

(a) "full density" and "impervious" mean the condition of a ceramic body whereby it exhibits less than 1% by volume of open porosity as determined either by the conventional mercury porosimetry test or by the boiling water test for apparent porosity generally as defined in ASTM Designation C20—70 effective January 22, 1970, both of which give essentially the same results for products of the invention stated herein;

(b) "raw" means the condition of ceramic batch material which is not prereacted with another batch ingredient, but which may have been individually calcined or fired without melting thereof or otherwise is unfired;

(c) "prereacted" means the condition of ceramic batch material which has been formed by reaction between two or more raw materials with, at most, melting of only minor portions thereof; and

(d) "mineral batch composition" means a ceramic batch composition in which all of the ceramic material is raw and/or prereacted.

## Examples

Cordierite ceramic materials of the type disclosed in U.S.A. Patents 3,885,977 and 4,001,028 are generally preferred for diesel particulate trap filters because, as was earlier found for their use as catalyst substrates in internal combustion engine exhaust systems, these materials have properties that enable them to withstand and be durable under the thermal, chemical and physical conditions to which they are subjected in such systems including those of diesel engines. A series of filter honeycomb samples with square cross-section cells were extruded of cordierite batch compositions as set forth in Table 1. Those samples were then dried and fired generally in accordance with the following typical firing schedule:

TABLE 1

Batch Compositions - weight % of total ceramic & graphite raw materials

| Raw Materials[a] | A | B-C | D-E-F-G-H | I-J-K | L-M | N |
|---|---|---|---|---|---|---|
| Georgia-Kaolin Hydrite MP Clay (APS 9.7) | 25.15 | 20.96 | 19.31 | 20.96 | 20.96 | 19.70 |
| Georgia-Kaolin Glomax LL Clay (APS 1.9) | 21.17 | 17.64 | 16.35 | 17.64 | 17.64 | 16.58 |
| Pfizer MP 96-28 Talc (APS 20) | 40.21 | 33.51 | 30.85 | 33.51[d] | 33.51[e] | 31.49 |
| Alcoa A-2 Alumina (APS 5.8) | 13.47 | 11.22 | 10.46 | 11.22 | 11.22 | 10.54 |
| Asbury 4012 graphite[b] | - | 16.67 | 23.03 | 16.67 | 16.67 | - |
| Asbury A-99 graphite[c] | - | - | - | - | - | 21.69 |
| Methyl cellulose binder/plasticizer | 4.0 | 4.0 | 4.0 | 4.0 | 4.0 | 4.0 |
| Alkai stearate extrusion aid | 0.5 | 0.5 | 0.5 | 0.5 | 0.5 | 0.5 |
| Distilled water plasticizer | 32.5 | 31.0 | 30.5 | 26.5 | 28.0 | 34.0 |

[a]APS means average particle size in micrometers

[b]Particle size (wt.%) : 1.4% + 120 U.S.Std mesh (125μm),21.1% - 120 + 140 U.S.Std (106-125μm)
(U.S.Std.Sieve)
                        63.9% - 140 + 200 U.S.Std mesh (75-106μm),13.6%-200 U.S.Std mesh (75μm)

[c]Particle size (wt.%): 97% - 325 U.S.Std mesh (45μm)

[d]Only + 150 U.S.Std mesh (100μm) screened fraction

[e]50 wt.% unscreened portion plus 50wt.% + 150 U.S.Std mesh 100μm) screened fraction.

80° to 1425° within about 60 hours.
Hold about 10 hours at 1425°C.
Cool 1425°C to room temperature within about 24 hours.

The walls of the as-fired samples had typical open porosity and mean pore diameters as set forth in Table 2, which varied among the samples with particular relation to variation in the graphite (as burn-out material) and talc used in the batch compositions.

## TABLE 2

| Samples | Open Porosity volume % | Mean Pore Diameter micrometers |
|---------|------------------------|-------------------------------|
| A | 35 | 4 |
| B | 44.5 | 9 |
| C | 41.3 | 10 |
| D | 48.0 | 11 |
| E | 48.5 | 13 |
| F | 47.7 | 13 |
| G | 46.8 | 12 |
| H | 65.6 | 11 |
| I | 65.8 | 15 |
| J | 38.8 | 35 |
| K | 37.2 | 35 |
| L | 36.7 | 23 |
| M | 44.7 | 22 |
| N | 54.6 | 6 |

Plugs were formed in the end portions of alternate cells, as previously described, or the sintered samples by injecting a plastically formable ceramic cement into such cell ends with an air-operated sealant gun. The amount of plugging cement injected into the cell ends was controlled by measuring the time that operative air pressure was applied to the sealant gun. By this means, the cement plugs were generally made with a depth or length into the cell from an end face thereof in the range of 9.5—13 mm.

A preferred plugging cement employed with the foregoing samples was the manganese-magnesium cordierite foam type of this invention. In particular, the preferred foam cement used in the above-noted samples had the batch composition in accordance with Sample 6 of Table 10 further below. The previously fired samples with the injected cement plugs were then fired generally in accordance with the following. The Mn-Mg cordierite grog in the cement batch was the dense cordierite containing manganese in accordance with the present invention. In particular, the grog was made of the following batch composition (in weight % of the total ceramic raw materials):

| | |
|---|---|
| Sample A grog (−200 U.S. std mesh (75 μm) | 84.48 |
| Georgia-Kaolin Kaopaque 10 clay (APS 10) | 10.00 |
| Baker $MnCO_3$ powder | 4.15 |
| Penn. Glass Sand Minusil silica (APS 5) | 0.78 |
| Pfizer MP 96—28 talc (APS 20) | 0.59 |
| Methyl cellulose binder/plasticizer | 4.0 |
| Alkali stearate extrusion aid | 0.5 |
| Distilled water plasticizer | 26.0 |

This Mn-Mg cordierite grog was fired generally in accordance with the same firing schedule as for Sample A, except that the maximum temperature was 1405°C instead of 1425°C.

The previously fired samples with the injected cement plugs, as noted above, were fired generally in accordance with the following typical firing schedule:

Room temperature to 1210°C within about 6 hours.

Hold about 30 minutes at 1210°C.

Cool 1210°C to room temperature within about 18 hours.

The cement foamed during firing to develop good sealing to the cell walls and generally fluid impervious plugs. The foaming action counteracts normal drying and firing shrinkage of an otherwise nonfoaming ceramic cement.

While the previously mentioned foam cement is preferred for forming the plugs, other suitable foaming and non-foaming ceramic cements may be used. Even non-ceramic cements or sealants may be used if they are capable of being durable under exhaust system conditions of heat as well as chemical and physical abuse.

The filter samples made as described above, and having various cell densities, wall thicknesses and external dimensions (diameter and length), were tested in the exhaust system of a 1980 Oldsmobile 350 CID (cubic inch displacement) diesel V—8 engine operated with a water brake dynomometer at constant conditions of speed and load. A driveshaft speed of 1000 rpm was used, which was equivalent to a vehicle road speed of 40 mph (64 km per hr). A load of 100 ft-lbs (approx. 136 joules) torque was used, which was equivalent to higher than basic vehicle road load at steady 40 mph (64 km per hr.) speed on a horizontally level road surface. This higher than basic road load provided more realistic exhaust particulates volume per unit time with respect to the fact that actual or commonly experienced road loads are ordinarily higher than basic road loads because of fluctuations in acceleration and variations in road surfaces from the level condition. The engine was warmed up to normal operating temperature before beginning the tests of the filter samples.

The filter cans were located about 2.1 metres downstream from the engine exhaust manifold. Exhaust gas flow rate through each filter placed in the can (from only four engine cylinders) was approximately constant in the range of 1.0—1.1 cubic metres per minute. Back pressure caused by (or pressure drops across) the filter samples were measured by water manometer and were monitored during the tests from an initial level up to the time they rose to 140 cm (137 mbar) of water, at which time the tests were discontinued because higher back pressure has been determined by the engine manufacturer to be unacceptable for proper engine operation. Thus, when the pressure drop across the filter reaches 140 cm of water, the filter has attained its maximum effective filter capacity in a single operation in the noted system. The total time from the beginning of the test (with the exhaust gas started through the filter) until the filter back pressure becomes 140 cm of water is referred to as the Operating Time of the filter.

Exhaust gas samples were taken downstream of the filter can. Without any filter in the can, the amount of particulates in the total unfiltered exhaust gas (in terms of grams per mile of g/mi.) were calculated from the amount of particulates measured in an unfiltered gas sample. This amount of particulates — called the Baseline Particulates — was found to have negligible variation over a range of back pressure exerted on the system up to 140 cm of water. The Baseline Particulates ranged between 0.17 g/mi and 0.24/mi. in the various tests. With a filter in the can, the amount of Residual Particulates in the total filtered exhaust gas (in terms of g/mi.) were calculated from the amount of particulates measured in a filtered gas sample. The difference between the Baseline Particulates and the Residual Particulates as a percent of the Baseline Particulates is referred to as the calculated Filter Efficiency. Incidentally, the Filter Efficiency in terms of the weight gain of the filter during a test (i.e. the gain over the initial untested filter weight) as a percent of the Baseline Particulates for the same test agreed closely with the above-noted calculated Filter Efficiency.

Table 3 sets forth the initial pressure drop, Operating Time and Filter Efficiency for a series of tested filter samples having a square cell density of 15.5 cells/cm², external dimensions of about 9.3 cm diameter and 30.5 cm length, and wall thickness as indicated in that table. In most cases for a given wall thickness, two filters of the same sample honeycomb body were tested.

TABLE 3

| Wall Thickness mm | 0.305 | 0.432 | 0.635 |
|---|---|---|---|
| **Initial Pressure Drop (cm of water) (1 cm H$_2$O = 0.98 mbar)** | | | |
| Sample B | 30.2/14.2 | 35.0/34.5 | 39.8/34.5 |
| Sample D | 29.4/24.8 | 28.2 | 40.5/29.7 |
| Sample H | 24.6/20.9 | 20.0/16.3 | 30.1 |
| Sample I | - | 11.6/10.0 | |
| Sample J | 6.2/7.3 | - | 15. 16.8 |
| Sample K | 8.1/8.0 | 9.5/9.9 | 17.4/17.6 |
| Sample L | 12.7 | 19.0/17.2 | 24.0/21.3 |
| Sample M | 11.0/11.7 | 29.0/23.7 | 23.4/21.7 |
| Sample N | 20.8/23.7 | - | 28.6/27.9 |
| **Operating Time (hours)** | | | |
| Sample C | 2.01/2.20 | 2.39/2.04 | 1.18/1.48 |
| Sample D | 3.40/3.8 | 3.17 | 1.89/2.3 |
| Sample H | 3.60/5.0 | 3.20/4.30 | 3.30 |
| Sample I | - | 4.50/4.90 | - |
| Sample J | 18.00/16.6 | - | 5.90/4.30 |
| Sample K | 8.80/11.3 | 5.40/5.70 | 2.17/3.00 |
| Sample L | 6.00 | 1.80/2.16 | 1.32/1.55 |
| Sample M | 7.80/8.50 | 2.67/3.00 | 1.39/1.78 |
| Sample N | 3.50/3.60 | 3.00/3.30 | 2.40/2.60 |

## TABLE 3 (Concluded)

### Filter Efficiency (%)

| | | | |
|---|---|---|---|
| Sample B | - | 91.3/95.0 | - |
| Sample C | 95.9/96.0 | 95.8/97.8 | 97.0/88.2 |
| Sample D | 94.6/95.3 | 96.0 | 94.6/95.0 |
| Sample H | 84.3/80.9 | 86.8/89.0 | 87.0 |
| Sample I | - | 69.7/60.1 | - |
| Sample J | 51.2/41.3 | - | 64.0/62.6 |
| Sample K | 57.5/46.4 | 66.8/62.3 | 78.1/77.6 |
| Sample L | 67.8 | 85.8/86.1 | 85.3/89.4 |
| Sample M | 66.8/70.3 | 87.0/84.9 | 88.4/87.6 |
| Sample N | 96.3/96.2 | 98.0/97.0 | 98.3/98.8 |

Preferred as the most practical filters, based on the foregoing tests, are those which have an average Filter Efficiency of at least 75% and a minimum average Operating Time of three hours. The data of TABLE 3 show samples D, H and N to fit this preferred category, which is more generally defined in Figure 8 by the area 1234 and by the most preferred area 1564 (represented by the boundary lines connecting those numbered points with coordinate values as follows):

### Coordinates

| Point | Open Porosity % | Mean pore Diameter μm |
|---|---|---|
| 1 | 58.5 | 1 |
| 2 | 33.0 | 20 |
| 3 | 52.5 | 20 |
| 4 | 90.0 | 1 |
| 5 | 39.5 | 15 |
| 6 | 62.0 | 15 |

Thus, the preferred category of filters for diesel exhaust systems have an optimum balance of open porosity and mean pore diameter.

The preceding test data also show a tendency for reduced Operating Time when maximizing Filter Efficiency in filters of a given external size and cell density. However, it has been found that Operating Time is directly proportional to the filter surface area. To avoid compromise of Filter Efficiency, Operating Time can be increased by increasing cell density and/or external size.

The test data of TABLE 4 (derived from the same test previously described) illustrate the effect of increasing cell density and of increasing external size on Operating time of the filters with wall thickness of 0.305 mm and a diameter of about 9.3 cm. Typical initial back pressures of those filters with square cell densities of 31 and 46.5 cells/cm$^2$ were respectively 14.1/10.5 and 15.7 cm of water. Like Sample D, Samples E and F also are within the preferred category of filters indicated by Figure 8. While no actual test data was obtained for a Sample F filter with more than 1 m$^2$ of filter surface area, it is evident from the presented data that such larger Sample F filter would have an Operating Time in excess of three hours.

13

TABLE 4

| Sample | Cell Density cells/$cm^2$ | Filter Length cm | Filter Surface Area $m^2$ | Filter Efficiency % | Operating Time hours |
|---|---|---|---|---|---|
| D | 15.5 | 15.2 | 0.63 | 94.9* | 0.65* |
| E | 31.0 | 15.2 | 0.74 | 94.9 | 1.67 |
| F | 46.5 | 15.2 | 0.98 | 91.8 | 2.43 |
| D | 15.5 | 30.5 | 1.34 | 95.0* | 3.6* |
| E | 31.0 | 30.5 | 1.79 | 95.2 | 5.0 |

*Average of two tests

EP 0 135 945 B1

A further illustration of larger filter surface area providing greater Operating Time is the test results with a Sample D filter having a square cell density of 15.5 cells/cm$^2$, a diameter of about 14.4 cm, a length of about 30.5 cm and wall thickness of about 0.432 mm. Its filter surface area was 3.03 m$^2$. The filter had an initial back pressure of 3.0 cm of water. It exhibited a Filter Efficiency of 79% and an Operating Time of 23.1 hours.

The tested filter samples were examined for the condition of accumulated particulates that generally completely filled such filters. No significant differences in the amount of particulates were seen with respect to varying radial and axially positions in the filters. These results are believed to be in significant part due to lack of lower angle corners in the geometric transverse square shapes of the cells in those filter samples. Further, the packed densities of the accumulated particulates were estimated to be relatively constant throughout the filter samples — being in the range of 0.05—0.06 g/cm$^3$ for samples with about 9.3 cm diameter and 30.5 cm length and about 0.09 g/cm$^3$ for the sample with about 14.4 cm diameter and 30.5 cm length.

Moreover, it was observed that the accumulation of particulates in the filter samples has a three-stage effect on filter pressure drop. The first stage involves a fairly substantial steady rise in pressure drop. It is followed by a second stage during which the pressure drop rises at a much lower rate. Finally, in a third stage (apparently when fluid flow paths through the accumulated particulates are being fully blocked), the rise in pressure drop accelerates again to a much higher rate. All three stages can usually be observed in the larger samples with 14.4 cm diameter and 30.5 cm length. However, the smaller samples often showed only either the first and second stages or the first stage before the pressure drop reached 140 cm of water.

The effects of lower cell density were demonstrated with Samples G of filters having square cell density of about 7.75 cells/cm$^2$ and wall thickness of about 0.635 mm. Their approximate external dimensions and test results are set forth in Table 5. Those results show that lower cell density tends to decrease Operating Time because of lower filter surface area, but that such tendency can be offset by employing larger external dimensions. As indicated in Figure 8, Sample G is also within the preferred category of filters.

## TABLE 5

| Diameter cm | Length cm | Filter Efficiency-% | Operating Time Hours |
|---|---|---|---|
| 9.3 | 30.5 | 95.0 | 1.35 |
| 9.3 | 30.5 | 96.4 | 1.73 |
| 14.4 | 29.8 | 93.3 | 14.7 |

A Sample A filter was also made with cell density of about 7.75 cells/cm$^2$, wall thickness of about 0.635 mm, diameter of about 14.9 cm and length of about 17.8 cm. It had a fairly high initial pressure drop indicative of providing too little Operating Time. However, improved Operating Time could be obtained with Sample A filters by increasing cell density and/or external dimensions.

A further embodiment of the present invention is a heat exchange assembly involving a rotatable honeycomb heat recovery (or exchange) wheel for absorbing heat from one fluid stream and imparting such heat to another fluid stream. According to the present invention, the conventional heat recovery wheel is modified to additionally act as a filter of particulates suspended in such fluids. Figure 9 schematically shows the conventional assembly with the heat recovery wheel 60 in modified form (similar to filter body 1 of Figures 1 and 2) to function as a filter as previously described. Wheel 60 rotates within and across two fluid flow paths within a heat exchange chamber and separated by conventional rubbing seal and duct structure 62. As shown, a first fluid passes sequentially through a pair of ducts (as indicated by arrows) with the wheel 60 interposed between those ducts and their fluid flow paths. The cooler first fluid passes from one duct into the slowly rotating honeycomb wheel 60, absorbs heat from the wheel as it passes through it and then continues as heated first fluid flowing through the second duct downstream of the wheel 60. A second fluid passes sequentially through another pair of ducts (as indicated by arrows) with the wheel 60 interposed between those ducts and their fluid flow paths. The hotter second fluid passes from one duct into the slowly rotating honeycomb wheel 60, gives up heat to the wheel as it passes through it and then continues as cooled second fluid flowing through the second duct downstream of the wheel 60. Thus, each of the faces 63 and 64 of wheel 60 alternately function as inlet and outlet faces as wheel 60 rotates between the first and second fluids' flow paths, which faces 63 and 64 are facing the fluid flow directions from and to the ducts. Wheel 60 also constitutes the filter with thin cell walls 65 defining two sets of alternate cells — cells 66 open at face 63 and the other cells closed adjacent face 63 by plugs 67. A reverse arrangement exists at and adjacent face 64.

Heat recovery wheel 60 is employed for recycling heat from a second fluid which is an exhaust gas an internal combustion diesel engine. The filter heat recovery wheel 60 will remove particulates entrained in the second fluid. Then, as the wheel 60 rotates a sector of the wheel from the second fluid flow path to the first fluid flow path, air for the combustion system passes through the same sector of wheel 60, but in a direction opposite of the second fluid, to pick up heat from it (thereby becoming preheated air) and to blow the particulates collected in such sector of wheel 60 back through the combustion system to be oxidized into gaseous species or a smaller particulate form. Moreover, the filter wheel 60 may also serve to filter particulates from incoming air and to exhaust such accumulated particulates with cooled exhaust gas from the combustion system.

Although the impervious products of the invention can be fabricated into a variety of forms by any of the usual or known ceramic forming techniques, a series of samples of the invention as noted in TABLES 6 and 8 were made in the preferred form of honeycomb structures by the previously noted method of extrusion and firing. The batch ceramic materials were dry blended with (as wt.% of the total ceramic materials therein) 4.0% methyl cellulose plasticizer/binder and 0.5% alkali sterate extrusion aid. Those mixtures were plasticized with the water in a mix-muller, and further plasticized and deaired by pre-extrusion into spaghetti-like masses. Then the fully plasticized and compacted batches were extruded in honeycomb green shapes, dried and fired.

Tables 6 and 8 also set forth the analytical molar compositions as calculated from the batch ceramic materials.

Table 7 sets forth the sintering temperatures, firing shrinkages and CTEs for the Samples 1—4 of Table 6 made of mineral batch compositions with wholly raw ceramic materials and exhibiting less than 1% by volume of open porosity.

Such temperatures were the approximate lowest temperature for full density.

TABLE 6

| Batch Materials[a]<br>weight % of total ceramic materials | 1 | 2 | 3 | 4 |
|---|---|---|---|---|
| Georgia-Kaolin Kaopaque 10 clay (APS 10) | 16.50 | 16.45 | 16.47 | 16.49 |
| Georgia-Kaolin Glomax LL clay (APS 1.9) | 55.55 | 48.98 | 47.11 | 45.66 |
| Penn.Glass Sand Minusil silica (APS 5) | - | - | 3.02 | 5.35 |
| Pfizer MP 40-27 talc (APS 3.5) | 15.43 | 12.48 | 7.55 | 3.74 |
| Baker reagent $MnCo_3$ powder | - | 22.10 | 25.86 | 28.77 |
| Diamond Shamrock MnO Type HPX powder | 12.51 | - | - | - |
| Distilled water plasticizer | 43.0 | 48.8 | 46.3 | 40.7 |
| Analytical Composition  - mole % | | | | |
| MnO | 12.8 | 14.5 | 17.4 | 19.8 |
| MgO | 9.4 | 7.9 | 4.9 | 2.5 |
| $Al_2O_3$ | 22.2 | 22.5 | 22.4 | 22.3 |
| $SiO_2$ | 55.6 | 55.1 | 55.3 | 55.4 |
| MnO as % of RO | 57.7 | 74.7 | 78.0 | 88.8 |
| MgO as % of RO | 42.3 | 35.3 | 22.0 | 11.2 |

[a]APS means average particle size in micrometers.

EP 0 135 945 B1

TABLE 7

| Sample | Sintering Temperature °C | % Firing Shrinkage | CTE x 10$^{-7}$/ °C 25-100 °C |
|--------|--------------------------|--------------------|-------------------------------|
| 1 | 1285 | 13.2 | 17.5 |
| 2 | 1300 | 19.7 | 19.7 |
| 3 | 1200 | 12.0 | 16.4 |
| 4 | 1200 | 19.4 | 18.4 |

In contrast to Samples 1—4, other similarly prepared samples with wholly raw ceramic materials, but not within this invention because of having molar proportions of MnO that were 50 mole % or less of RO, failed to develop full density at sintering temperatures that did not cause overfiring. For example, a sample with the analytical molar composition of $0.8\,MnO \cdot 1.2\,MgO \cdot 2Al_2O_3 \cdot 5\,SiO_2$ (wherein MnO is 40 mole % of RO) exhibited 47% by volume of open porosity after being fired at sintering temperature of 1240°C.

18

TABLE 8

| Batch Materials[a] weight % of total ceramic materials | 5 | 6 | 7 | 8 | 9 |
|---|---|---|---|---|---|
| Georgia-Kaolin Kaopaque 10 clay (APS 10) | 32.20 | 12.88 | 10.00 | 10.00 | 6.44 |
| Penn.Glass Sand Minusil silica (APS 5) | 2.55 | 1.00 | 0.78 | 0.78 | 0.50 |
| Pfizer MP 96-28 Montana talc (APS 20) | 1.90 | 0.76 | 0.59 | 0.59 | 0.38 |
| Baker reagent $MnCO_3$ powder | 13.35 | 5.34 | 4.15 | 4.15 | 2.67 |
| Prereacted cordierite material # 1 (APS 9) | 50.00 | 80.00 | 84.48 | – | 90.00 |
| Prereacted cordierite material # 2 (APS 8.8) | – | – | – | 84.48 | – |
| Distilled water plasticizer | b | b | 38 | 26 | b |
| Analytical Composition - mole % | | | | | |
| MnO | 8.1 | 3.0 | 2.2 | 2.2 | 1.5 |
| Mgo | 14.3 | 19.7 | 20.4 | 20.4 | 21.2 |
| $Al_2O_3$ | 22.8 | 22.8 | 22.7 | 22.7 | 22.8 |
| $SiO_2$ | 54.8 | 54.5 | 54.7 | 54.7 | 54.5 |
| MnO as % of RO | 36.2 | 13.2 | 9.7 | 9.7 | 6.6 |
| Mgo as % of RO | 63.8 | 86.8 | 90.3 | 90.3 | 93.4 |

[a]APS means average particle size in micrometers

[b]Amount was sufficient to render batch plastic for extrusion into honeycomb body(similar to Sample 7).

The Samples 5—9 in Table 8 illustrate the mineral batch compositions of the invention containing prereacted cordierite material. Prereacted cordierite material # 1 is essentially the same as fired composition F in U.S.A. Patent 3,885,977 but in crushed and ground particulate form. Pre-reacted cordierite material # 2 is essentially the same as fired Composition 804 in U.S.A. Patent 4,001,028 but in crushed and ground particulate form.

Table 9 sets forth the sintering temperatures, firing shrinkages and CTEs for the Samples 5—9 of Table 8 exhibiting less than 1% by volume of open porosity. Such temperatures were the approximate lowest temperatures for full density.

### TABLE 9

| Sample | Sintering Temperature °C | % Firing Shrinkage | CTE x $10^{-7}/$°C 25 –1000 °C |
|--------|--------------------------|--------------------|----------------------------------|
| 5 | 1250 | 15.4 | 17.1 |
| 6 | 1390 | 14.6 | 17.8 |
| 7 | 1400 | 16–18 | 16.7 |
| 8 | 1400 | 16–18 | 18.0 |
| 9 | 1410 | 17.0 | 17.0 |

Other samples with either less than 50 wt.% pre-reacted cordierite or having MnO substantially outside the range of 5—40 mole % of RO while also having at least 50 wt% pre-reacted cordierite cannot be reliably made with full density.

A series of foamable particulate ceramic cement samples according to this invention were prepared by thoroughly mixing the batch materials as shown in Table 10 to form pastes of those samples.

The analytical molar composition of the combined raw base materials of clay, silica and Mno for Sample 1—4 and 6 was 1.84 MnO · 2.04 $Al_2O_3$ · 5.11 $SiO_2$. Such composition for sample 5 was 2.36 MnO · 1.29 $Al_2O_3$ · 5.35 $SiO_2$.

## TABLE 10

### Batch Compositions - weight % of total ceramic materials (exluding SiC)

| Batch materials[a] | 1 | 2 | 3 | 4 | 5 | 6 |
|---|---|---|---|---|---|---|
| Georgia-Kaolin Kaopaque 10 clay (APS 10) | 60.77 | 57.57 | 51.17 | 38.38 | 25.04 | 57.57 |
| Penn.Glass Sand Minusil silica (APS 5) | 7.43 | 7.04 | 6.26 | 4.69 | 12.57 | 7.04 |
| Baker reagent $MnCO_3$ powder | 26.80 | 25.39 | 22.57 | 16.93 | 22.39 | 25.39 |
| Mn-Mg cordierite grog (95 wt % - 200 U.S.Std mesh (75μm) | 5.0 | 10.0 | 20.0 | 40.0 | 40.0 | 10.0 |
| Norton RA 600 SiC (600 grit) | 1.96 | 1.91 | 1.80 | 1.60 | 1.60 | 1.0 |
| Methyl cellulose binder/plasticizer | 2.4 | 2.3 | 2.0 | 1.5 | 1.5 | 2.0 |
| Distilled water plasticizer[c] | 50-100 | | | | | |
| Foaming temperature - °C | 1170 | 1185 | 1210 | 1250 | 1250 | 1185 |
| Coefficient of Thermal Expansion x $10^{-7}$/°C | - | 19.6 | 17.2 | 17.7 | 27.3 | 17.7 |

[a]APS means average particle size in micrometers.

[b]Over 25-1000°C.

[c]Amounts varied among different trial of each Sample to provide different cement viscosities suitable for each cementing trial.

EP 0 135 945 B1

The Mn-Mg cordierite grog in the cement batches in Table 10 was a dense cordierite containing manganese of the present invention. In particular, the grog was made of the following batch composition (in weight % of the total ceramic batch materials):

| | |
|---|---|
| Mg Cordierite grog (95%—200 U.S. Std mesh 75µm) | 84.48 |
| Georgia-Kaolin Kaopaque 10 clay (APS 10) | 10.00 |
| Baker reagent $MnCO_3$ powder | 4.15 |
| Penn. Glass Sand Minusil silica (APS 5) | 0.78 |
| Pfizer MP 96—28 talc (APS 20) | 0.59 |
| Methyl cellulose binder/plasticizer | 4.0 |
| Alkali sterate extrusion aid | 0.5 |
| Distilled water plasticizer | 26.0 |

This Mn-Mg cordierite grog was fired generally in accordance with the following firing schedule:
80°C to 1405°C within about 60 hours.
Hold about 10 hours at 1405°C.
Cool 1405°C to room temperature within about 24 hours.

The Mg cordierite grog (in the batch for the Mn-Mg cordierite grog) was made of the following batch composition (in weight % of the total ceramic batch materials):

| | |
|---|---|
| Georgia-Kaolin Hydrite MP clay (APS 9.7) | 25.15 |
| Georgia-Kaolin Glomax LL clay (APS 1.9) | 21.17 |
| Pfizer MP 96—28 talc (APS 20) | 40.21 |
| Alcoa A-2 alumina (APS 5.8) | 13.47 |
| Methyl celulose binder/plasticizer | 4.0 |
| Alkali sterate extrusion aid | 0.5 |
| Distilled water plasticizer | 32.5 |

This Mg cordierite grog was fired generally in accordance with the same firing schedule as for the Mn-Mg cordierite grog, except that the maximum temperature was 1425°C.

The analytical molar composition of Mn-Mg cordierite grog was $2.03 \ RO \cdot 20.4 \ Al_2O_3 \cdot 4.92 \ SiO_2$ wherein RO consisted of 9.7 mole % MnO and 90.3 mole % MgO.

Pieces of ceramic honeycomb monolith were extruded in accordance with U.S.A. Patents 3,790,654 and 3,919,384 from the same batch composition as described for the Mn-Mg cordierite grog. Those extruded green honeycomb bodies were then fired in the manner as disclosed in U.S.A. Patent 3,899,326 and in accordance with the same firing schedule as described for the Mn-Mg cordierite grog. A series of pairs of these honeycomb pieces were cemented together by applying the sample pastes described in Table 10 to the cordierite surfaces of these pieces that were to be joined and then pressing those paste-coated surfaces together. These assembled pairs of cemented pieces were dried in air at least 22—75°C, then fired at about 300°C/hr. to the foaming temperature set forth in Table 1, held at the foaming temperature for about one hour and thereafter cooled at furnace rate to at least 200°C, at which time the foam cemented pieces were removed from the furnace for further cooling in ambient air atmosphere. The coefficients of thermal expansion (CTE) of the foamed cement samples are set forth in Table 10, which are closely similar to the typical CTE of $18 \times 10^{-7}$/°C (25—1000°C) for the pieces except the CTE of Sample 5.

All of those sintered foamed cement samples had a substantially wholly cordierite crystal structure.

Upon subjecting the foam cemented pieces to a cycling thermal shock test of 50 cycles of heating from 250°C to 800°C in 3 minutes and then cooling back to 250°C in 3 minutes, the foam cemented pieces with cement Samples 1—4 and 6 showed good resistance to thermal shock whereas the foam cemented pieces with cement Sample 5 showed moderate resistance to thermal shock. However, cement Sample 5 should serve well with pieces having CTE more closely similar to the CTE of foamed Sample 5 so as to exhibit good resistance to thermal shock.

Foamable cement Sample 6 has also been used to plug the end portions of cells in extruded ceramic honeycomb bodies made of the same and similar compositions and fired in the same manner as the Mg cordierite grog previously described. In those cases, the Mn-Mg cordierite grog was 95 wt.% — 325 U.S. Std mesh (45 µm), and the cement batch was formed with 2.0 wt.% methyl cellulose and 70.0 wt.% water to provide a paste that was injected into the cell ends, between the surfaces of opposed cell walls, by means of an air pressure operated sealant or caulking gun with an appropriately shaped nozzle. Those bodies with the green plugs were then fired generally in accordance with the following typical firing schedule:

Room temperature to 1210°C within about 6 hours.

Hold about 30 minutes at 1210°C.

Cool 1210°C to room temperature within about 18 hours. The cement foamed during firing to develop a sintered cordierite mass having good sealing to the cell walls and being generally impervious to fluids.

The particle sizes of cordierite grog and SiC or other foaming agent in the cement can be varied as desired. For example, the grog may be as coarse as − 20 U.S.Std mesh (850µm).

**Claims**

1. Apparatus for filtering solid particulates from suspension in fluid streams, which comprises a filter of honeycomb structure having a matrix of thin porous walls defining a plurality of cells extending longitudinally and mutually parallel therethrough between inlet and outlet end faces of the structure, the walls containing substantially uniform interconnected open porosity of a volume and size sufficient to enable the fluid to flow completely through the walls and to restrain most or all of the particulates from passing completely through the walls, the transverse cross-sectional shapes of the cells forming a substantially uniformly repeating pattern of geometric shapes without interior corner angles of less than 30°, an inlet group of the cells open at the inlet end face and closed adjacent to the outlet end face, an outlet group of the cells closed adjacent to the inlet end face and open at the outlet end face, each cell of the inlet group sharing cell walls only with cells of the outlet group, and each cell of the outlet group sharing cell walls only with cells of the inlet group, the apparatus being as part of a diesel engione exhaust gas system, interposed across the exhaust gas path, with the inlet face of the filter facing upstream of the gas path, the closing of the groups of cells being achieved by use of a foamable particulate ceramic cement capable of forming a sintered cordierite foamed ceramic mass, the cement consisting essentially, by weight, of:

1—40% cordierite grog,

99—60% ceramic base material and an effective amount of a foaming agent to effect foaming of the cement upon firing to produce the foamed ceramic mass, the base material being raw ceramic material that has an analytical molar composition consisting essentially of $1.7—2.4\ MO \cdot 1.2—2.4\ Al_2O_3 \cdot 4.5—5.4\ SiO_2$ wherein MO comprises, as mole % of MO, 0—55% MgO and at least 45% MnO, and the grog being ceramic material that has been previously fired and comminuted, and that has an analytical molar composition consisting essentially of $1.7—2.4\ RO. 1.9—2.4\ Al_2O_3 \cdot 4.5—5.2\ SiO_2$ wherein RO comprises, as mole % of RO, MnO ion amount of 0% up to a mole % that is 20 mole % lower than the mole % of MO that MnO and the balance is substantially MgO.

2. Apparatus as in claim 1, wherein the walls within each transverse sector of the structure have substantially uniform thickness.

3. Apparatus as claimed in claim 1, wherein the walls throughout the structure have a substantially uniform thickness.

4. Apparatus as claimed in any preceding claim, wherein the transverse cross-sectional geometric shapes of the cells are of quadrilateral, triangular, or square configuration.

5. Apparatus as claimed in any preceding claim, wherein the walls are not greater than 1.5mm thick and the structure has a transverse cross-sectional cell density of at least $1.5\ cells/cm^2$.

6. Apparatus as claimed in claim 5, wherein the walls are not greater than 0.635 mm thick.

7. Apparatus as claimed in claim 5 or 6, wherein the open porosity is at least 35% by volume and the mean pore diameter is at least 3.5µm.

8. Apparatus as claimed in claim 7, wherein the cell density is at least $7.75\ cells/cm^2$.

9. Apparatus as claimed in claim 8, wherein the geometric shapes of the cells are either square or triangles.

10. Apparatus as claimed in any one of the preceding claims, wherein the filter is fabricated of ceramic material.

11. Apparatus as claimed in any preceding claim wherein the foaming agent is SiC in an amount of at least 0.25% and up to 5% weight of grog plus base material.

12. Apparatus as claimed in claim 11, wherein the grog is at least 5 wt% and the base material is not more than 95 wt.%.

13. Apparatus as claimed in claim 11 or 12, wherein the analytical molar composition of the base material is $1.7—2.4\ MO. 1.9—2.4\ Al_2O_3 \cdot 4.5—5.2\ SiO_2$ the grog is 5—20 wt%, the base material is 95—80 wt%, SiC is at least 1 wt% and MO comprises not more than 15 mole % MgO.

14. Apparatus as claimed in claim 13, wherein the analytical molar composition of the grog is: $1.8—2.1\ RO \cdot 1.9—2.1\ Al_2O_3 \cdot 4.9—5.2\ SiO_2$, wherein RO comprises 8—12 mole % MnO and the balance MgO, and Sic is not more than 2 wt%.

15. Apparatus as claimed in claim 14, wherein the analytical molar composition of the base material is: $1.8—2.1\ MgO. 1.9—2.1\ Al_2O_3 \cdot 4.9—5.2\ SiO_2$, and MO is wholly MnO.

# EP 0 135 945 B1

**Patentansprüche**

1. Vorrichtung zum Filtern fester Partikel aus einer Suspension in Fluidströmen, bestehend aus einem Filter mit einem Wabenaufbau, der eine Matrix aus dünnen porösen Wandungen besitzt, die zahlreiche Zellen begrenzen, welche sich in Längsrichtung und wechselseitig parallel durch diese zwischen einer Einlaß- und einer Auslaßendfläche des Aufbaues erstrecken, wobei die Wandungen eine im wesentlichen gleichförmige verbundene offene Porosität eines Volumens und einer Größe aufweisen, die für ein vollständiges Durchströmen des Fluids durch die Wandungen und für das Abhalten der meisten oder aller Teilchen von dem vollständigen Durchtritt durch die Wandungen ausreicht, und wobei die querverlaufenden Querschnittsformen der Zellen ein im wesentlichen sich gleichförmig wiederholendes Muster geometrischer Formen ohne Inneneckwinkel von weniger als 30° bilden, einer Einlaßgruppe von an der Einlaßendfläche offenen und nahe der Auslaßendfläche geschlossenen Zellen, und aus einer Auslaßgruppe von nahe der Einlaßendfläche geschlossenen und an der Auslaßendfläche offenen Zellen, wobei jede Zelle der Einlaßgruppe nur mit Zellen der Auslaßgruppe Wände gemeinsam aufweist, und wobei jede Zelle der Auslaßgruppe nur Wände mit den Zellen der Einlaßgruppe gemeinsam besitzt, wobei die Vorrichtung als Teil eines Dieselmotorabgassystems quer zum Abgasweg zwischengeschaltet ist, wobei die Filtereinlaßfläche stromaufwarts des Gasweges weist, und wobei das Schließen der Gruppen von Zellen durch die Verwendung eines schäumbaren Keramikpartikelzements, der die Bildung einer gesinterten aufgeschäumten keramischen Cordieritmasse ermöglicht, vorgenommen ist, wobei der Zement im wesentlichen, ausgedrückt in Gewichtsprozenten, besteht aus

1—40% Cordierit-Ziegelmehl,

99—60% keramischem Grundmaterial und einer wirkungsvollen Menge eines Schaummittels zum Aufschäumen des Zements beim Brennen zur Erzeugung der aufgeschäumten keramischen Masse, wobei das Grundmaterial aus rohem keramischen Material besteht, das eine analytische molare Zusammensetzung aufweist, die sich im wesentlichen zusammensetzt aus $1{,}7{-}2{,}4$ MO . $1{,}2{-}2{,}4$ Al$_2$O$_3$ . $4{,}5{-}5{,}4$ SiO$_2$, wobei MO, in Mol-% von MO, 0—55% MgO und wenigstens 45% MnO aufweist, und wobei das Ziegelmehl aus keramischem Material besteht, das zuvor gebrannt und feingemahlen wurde und das eine analytische molare Zusammensetzung aufweist, die im wesentlichen besteht aus $1{,}7{-}2{,}4$ RO . $1{,}9{-}2{,}4$ Al$_2$O$_3$ . $4{,}5{-}5{,}2$ SiO$_2$, wobei RO, in Mol-% von RO, MnO in einer Menge von 0% bis zu 1 Mol-% aufweist, d.h. 20 Mol-% weniger als das Mol-% von MO, welches MnO ist, und das Gleichgewicht im wesentlichen aus MgO beseht.

2. Vorrichtung nach Anspruch 1, dadurch gekennzeichnet, daß die Wandungen innerhalb jedes querlaufenden Abschnitts des Aufbaues im wesentlichen eine gleichförmige Dicke aufweisen.

3. Vorrichtung nach Anspruch 1, dadurch gekennzeichnet, daß die Wandungen durch den Aufbau hindurch eine im wesentlichen gleichförmige Dicke besitzen.

4. Vorrichtung nach einem vorangehenden Anspruch, dadurch gekennzeichnet, daß die querverlaufenden geometrischen Querschnittsformen der Zellen eine viereckige, dreieckige oder quadratische Gestaltung aufweisen.

5. Vorrichtung nach einem vorangehenden Anspruch, dadurch gekennzeichnet, daß die Wände nicht mehr als 1,5 mm dick sind, und daß der Aufbau eine querverlaufende Querschnittszellendichte von wenigstens 1,5 Zellen/cm$^2$ besitzt.

6. Vorrichtung nach Anspruch 5, dadurch gekennzeichnet, daß die Wände nicht mehr als 0,635 mm dick sind.

7. Vorrichtung nach Anspruch 5 oder 6, dadurch gekennzeichnet, daß die offene Porosität wenigstens 35 Volumen-% beträgt, und daß der mittlere Porendurchmesser wenigstens 3,5 μm ist.

8. Vorrichtung nach Anspruch 7, dadurch gekennzeichnet, daß die Zellendichte wenigstens 7,75 Zellen/cm$^2$ beträgt.

9. Vorrichtung nach Anspruch 8, dadurch gekennzeichnet, daß die geometrische Formen der Zellen entweder quadratisch oder dreieckig sind.

10. Vorrichtung nach einem der vorangehenden Ansprüche, dadurch gekennzeichnet, daß der Filter aus keramischem Material hergestellt ist.

11. Vorrichtung nach einem der vorangehenden Ansprüche, dadurch gekennzeichnet, daß das Schaumittel SiC in einer Menge von wenigstens 0,25 bis 5 Gewichts-% des Ziegelmehls zuzüglich des Grundmaterials vorliegt.

12. Vorrichtung nach Anspruch 11, dadurch gekennzeichnet, daß das Ziegelmehl wenigstens 5 Gewichts-% und das Grundmaterial nicht mehr als 95 Gewichts-% betragen.

13. Vorrichtung nach Anspruch 11 oder 12, dadurch gekennzeichnet, daß die analytische Molzusammensetzung des Grundmaterials $1{,}7{-}2{,}4$ MO . $1{,}9{-}2{,}4$ Al$_2$O$_3$ . $4{,}5{-}5{,}2$ SiO$_2$ beträgt, daß das Ziegelmehl 5—20 Gewichts-% ausmacht, daß das Grundmaterial 95—80 Gewichts-% beträgt, daß SiC wenigstens bei 1 Gewichts-% liegt, und daß MO nicht mehr als 15 Mol-% MgO aufweist.

14. Vorrichtung nach Anspruch 13, dadurch gekennzeichnet, daß die analytische Molzusammensetzung des Ziegelmehls $1{,}8{-}2{,}1$ RO . $1{,}9{-}2{,}1$ Al$_2$O$_3$ . $4{,}9{-}5{,}2$ SiO$_2$ beträgt, wobei RO 8—12 Mol-% MnO und das MgO-Gleichgewicht besitzt, und wobei SiC night mehr als 2 Gewichts-% beträgt.

15. Vorrichtung nach Anspruch 14, dadurch gekennzeichnet, daß die analytische

## EP 0 135 945 B1

Molzusammensetzung des Grundmaterials 1,8—2,1 MgO . 1,9—2,1 $Al_2O_3$ . 4,9—5,2 $SiO_2$ beträgt, und daß MO vollständig aus MnO besteht.

**Revendications**

1. Appareil pour séparer par filtration des matières particulaires solides de leur suspension dans des courants fluides, qui comprend un filtre à structure en nid d'abeille ayant une matrice de minces parois poreuses définissant plusieurs cellules s'étendant longitudinalement et parallèles les unes aux autres sur toute la distance comprise entre les faces d'extrémités d'entrée et de sortie de la structure, les parois contenant une porosité ouverte interconnectée sensiblement uniforme d'une taille et d'un volume suffisants pour permettre au fluide de s'écouler complètement à travers les parois et pour empêcher la plupart ou la totalité des particules solides de traverser complètement les parois, les formes de section transversale des cellules constituant un motif de formes géométriques se répétant de façon sensiblement uniforme, sans angles au sommet intérieurs de moins de 30°, un groupe d'entrée de cellules ouvertes à la face d'extrémité d'entrée et fermées à proximité de la face d'extrémité de sortie, un groupe de sortie de cellules fermées à proximité de la face d'extrémité d'entrée et ouvertes à la face d'extrémité de sortie, chaque cellule du groupe d'entrée n'ayant des parois de cellule en commun qu'avec des cellules du groupe de sortie et chaque cellule du groupe de sortie n'ayant des parois de cellule en commun qu'avec des cellules du groupe d'entrée, l'appareil faisant partie d'un système d'échappement de moteur diesel en étant interposé dans le trajet des gaz d'échappement, la face d'entrée du filtre étant tournée vers l'amont du trajet des gaz, la fermeture des groupes de cellules étant réalisée par l'emploi d'un ciment céramique particulaire expansible capable de former une masse céramique expansée de cordiérite frittée, le ciment étant essentiellement constitué, en poids, de:

1 à 40% de chamotte de cordiérite,

99 à 60% d'une matière céramique de base et une quantité efficace d'un agent gonflant pour provoquer l'expansion du ciment à la cuisson afin de produire la masse céramique expansée, la matière de base étant une matière céramique crue dont la composition molaire analytique consiste essentiellement en: 1,7 à 2,4 MO . 1,2 à 2,4 $Al_2O_3$ . 4,5 à 5,4 $SiO_2$, où MO est constitué, en moles % de MO, de 0 à 55% de MgO et au moins 45% de MnO, et la chamotte étant une matière céramique qui a été préalablement cuite et broyée et dont la composition molaire analytique consiste essentiellement en: 1,7 à 2,4 RO . 1/9 à 2,4 $Al_2O_3$ . 4,5 à 5,2 $SiO_2$, où RO est constitué, en moles % de RO, de MnO en un nombre de % limité à un % molaire maximum qui est inférieur de 20 moles % au % molaire de MnO dans MO et le reste est substantiellement du MgO.

2. Appareil tel que revendiqué dans la revendication 1, dans lequel les parois de trouvant dans chaque secteur transversal de la structure ont une épaisseur sensiblement uniforme.

3. Appareil tel que revendiqué dans la revendication 1, dans lequel les parois ont une épaisseur sensiblement uniforme dans toute la structure.

4. Appareil tel que revendiqué dans une quelconque revendication précédente, dans lequel les formes géométriques en section transversale des cellules sont de configuration quadrilatérale, triangulaire ou carrée.

5. Appareil tel que revendiqué dans une quelconque revendication précédente, dans lequel les parois n'ont pas plus de 1,5 mm d'épaisseur et la structure présente une densité de cellules en section transversale d'au moins 1,5 cellule/cm².

6. Appareil tel que revendiqué dans la revendication 5, dans lequel les parois n'ont pas plus de 0,635 mm d'épaisseur.

7. Appareil tel que revendiqué dans la revendication 5 ou 6, dans lequel la porosité ouverte est d'au moins 35% en volume et le diamètre moyen des pores est d'au moins 3,5 μm.

8. Appareil tel que revendiqué dans la revendication 7, dans lequel la densité de cellules est d'au moins 7,75 cellules/cm².

9. Appareil tel que revendiqué dans la revendication 8, dans lequel les formes géométriques des cellules sont soit des carrés, soit des triangles.

10. Appareil tel que revendiqué dans l'une quelconque des revendications précédentes, dans lequel le filtre est constitué d'un matériau céramique.

11. Appareil tel que revendiqué dans une quelconque revendication précédente, dans lequel l'agent gonflant est SiC en une quantité d'au moins 0,25% et d'au plus 5% en poids du total de la chamotte et de la matiére de base.

12. Appareil tel que revendiqué dans la revendication 11, dans lequel la quantité de la chamotte est d'au moins 5% en poids et la quantité de la matière de base n'est pas supérieure à 95% en poids.

13. Appareil tel que revendiqué dans la revendication 11 ou 12, dans lequel la composition molaire analytique de la matière de base est: 1,7 à 2,4 MO · 1,9 à 2,4 $Al_2O_3$ · 4,5 à 5,2 $SiO_2$, la quantité de la chamotte est de 5 à 20% en poids, la quantité de la matière de base est de 95 à 80% en poids, la quantité de SiC est d'au moins 1% en poids et MO ne comprend pas plus de 15 moles % de MgO.

14. Appareil tel que revendiqué dans la revendication 13, dans lequel la composition molaire analytique de la chamotte est : 1,8 à 2,1 RO · 1,9 à 2,1 $Al_2O_3$ · 4,9 à 5,2 $SiO_2$, où RO comprend 8 à 12 moles % de MnO et le reste de MgO, et la quantité de SiC n'est pas supérieure à 2% en poids.

15. Appareil tel que revendiqué dans la revendication 14, dans lequel la composition molaire analytique de la matière de base est : 1,8 à 2,1 MO · 1,9 à 2,1 $Al_2O_3$ · 4,9 à 5,2 $SiO_2$, et MO est en totalité du MnO.

Fig. 1

Fig. 2

Fig. 3

Fig. 4

Fig. 5

Fig. 6

Fig. 7

Fig. 8

COOLER FIRST
FLUID IN
FLOW

HEATED FIRST
FLUID OUT
FLOW

60

65

67

64

66

63

62

COOLED SECOND
FLUID OUT FLOW

HOTTER SECOND
FLUID IN FLOW

*Fig. 9*